# EUROPEAN PATENT APPLICATION

(11) **EP 4 276 586 A1**
(43) Date of publication of application: **15.11.2023**
(21) Application number: 22172898.3
(22) Date of filing: 12.05.2022
(51) Int. Cl.: G06F 3/01, G06F 3/04815, G06Q 10/10

(54) **PROVIDING INFORMATION ABOUT AN AREA OF INTEREST**

(71) Applicant: Koninklijke Philips N.V., 5656 AG Eindhoven (NL)
(72) Inventor: BUIL, Vincentius Paulus, Eindhoven (NL); LAUTE, Niels, Eindhoven (NL); GEURTS, Lucas Jacobus Franciscus, Eindhoven (NL); TALGORN, Elise Claude Valentine, Eindhoven (NL); VERSCHOOR, Volker Barnhart, Eindhoven (NL); MITCHELL, Andrew David, Eindhoven (NL); KAUFHOLZ, Paul Augustinus Peter, Eindhoven (NL)
(74) Representative: Philips Intellectual Property & Standards

(57) **Abstract**

A mechanism for selectively providing a second individual with information about an area of interest to a first individual. The mechanism determines whether the area of interest falls within a field of view of the second individual. If the area of interest does not fall within this field of view, then appropriate information about the area of interest is provided to the second individual.

## Description

### FIELD OF THE INVENTION

The present invention relates to the field of aiding collaboration between individuals in a shared environment.

### BACKGROUND OF THE INVENTION

There are a number of environments and use-case scenarios in which multiple individuals need to collaborate in a same physical space to perform or execute a technical task. Examples include surgical procedures, repair or maintenance of a piece of equipment (e.g. a car), TV or film production, preparation of food in a commercial kitchen and so on.

It is usual for individuals in such circumstances to communicate with one another in order to improve collaboration. In particular, individuals may focus upon an area or point of interest, and communicate with another individual about the area/point of interest. As an example, during a surgical procedure, a surgeon may ask a surgical assistant to provide a tool for stemming or clamping a bleed (which acts as the point/area of interest to the surgeon).

There is an ongoing desire to improve collaboration in such environments, to minimize error and avoid the potential for mistakes occurring. Approaches that facilitate such improvements would provide more efficient performance of a technical collaborative task.

### SUMMARY OF THE INVENTION

The invention is defined by the claims.

According to examples in accordance with an aspect of the invention, there is provided a computer-implemented method of aiding a second individual to identify an area of interest to a first individual, wherein the first and second individuals are located in a same physical environment.

The computer-implemented method comprises: determining an area of interest to the first individual with respect to a physical environment in the vicinity of the first individual; determining whether or not the determined area of interest is within a field of view of the second individual; and responsive to determining that the determined area of interest is not within the field of view of the second individual: providing an indicator that the determined area of interest is not within the field of view of the second individual to the first individual and/or the second individual; and/or providing further information about the determined area of interest to the second individual.

The proposed approach provides a technique for supporting two or more users or individuals within a shared physical environment, to facilitate provision (to a second user/individual) of information about a point or area of interest to a first user/individual. In particular, an area of interest to the first individual is determined and, if this area of interest is not in a field of view of the first individual, an indicator is provided to the first individual and/or the second individual and/or further information about the determined area of interest is provided to the second individual.

The proposed approach thereby provides an indicator to the first/second individual and/or information to a second user only if the second user is unable to see the area of interest. This facilitates automatic alerting of the first and/or second individual to an inability of the second individual to see the area of interest and/or cueing or understanding of the area of interest for the second individual.

The proposed approach may, for instance, address an instance where a first user is asking or referring to a second user about a point of interest in the first person's field of view, which is not visible from the second person's field of view. Embodiments are aimed at notifying one or both users of this situation and alerting the same to the first/second user and/or supporting the second user to obtain a view of the point of interest or other information about the point of interest.

The method may further comprise, responsive to determining that the determined area of interest is within the field of view of the second individual, neither providing the indicator that the determined area of interest is not within the field of view of the second individual to the first individual and/or the second individual nor providing the further information about the determined area of interest to the second individual.

It will be appreciated that other forms of information could be provided to the second user based on the determined area of interest. For instance, an indicator of the location of the determined area of interest within the second individual's field of view may be provided. However, this information will be different to the information provided if the area of interest is not within the field of view of the second individual.

The method may comprise the step of, responsive to determining that the determined area of interest is not within the field of view of the second individual, providing, to the first individual, an indicator that the determined area of interest is not within a field of view of the second individual. Thus, an indicator ("first indicator") may be provided to the first individual if the determined area of interest is not within the field of view of the second individual. Of course, it will be understood that this first indicator is not provided to the first individual if the determined area of interest is within the field of view of the second individual.

The method may comprise the step of, responsive to determining that the determined area of interest is not within the field of view of the second individual, providing, to the second individual, an indicator that the determined area of interest is not within a field of view of the second individual. Thus, an indicator ("second indicator") may be provided to the second individual if the determined area of interest is not within the field of view of the second individual. Of course, it will be understood that this second indicator is not provided to the second individual if the determined area of interest is within the field of view of the second individual.

The step of determining the area of interest may comprise: obtaining an environment model representing the physical environment in the vicinity of the first individual; obtaining first gaze data representing an origin and direction of the first individual's gaze with respect to the environment model; and processing at least the environment model and the first gaze data to identify an area of interest with respect to the environment model.

In this way, gaze tracking or identification can be used in the identification of the area of interest to the first individual. Gaze tracking techniques are widely employed in the prior art, but are adopted here for identifying an area of interest for aiding a second individual (who is not the tracked gazer) in obtaining additional information.

The environment model and the first gaze data may be derived from image data.

The step of determining whether or not the determined area of interest is within a field of view of the second individual may comprise: obtaining spatial information identifying a relative position and orientation of the second individual with respect to the environment model; processing the spatial information, the area of interest and the environment model to determine whether or not the determined area of interest is within the identified field of view of the second individual with respect to the environment in the vicinity of the first individual.

In particular, the step of processing the spatial information and the environment model may comprise processing the spatial information and the environment model to identify a field of view of the second individual with respect to the environment model. Determining whether the area of interest is within the identified field of view may comprise determining whether the position of the area of interest, with respect to the environment model, lies within the field of view with respect to the environment model.

In at least one examples, the step of determining the area of interest further comprises obtaining first communication data representing one or more verbal or non-verbal communications from the first individual about the area of interest; and wherein one or more of the following is performed: the step of processing at least the environment model and the first gaze data comprises processing at least the environment model, the first gaze data and the first communication data to identify the area of interest within the environment in the vicinity of the first individual.

The method may further comprise obtaining second communication data representing one or more verbal or non-verbal communications from the first individual; wherein the step of determining whether or not the determined area of interest is within a field of view of the second individual is only performed if the second communication data contains a verbal or non-verbal communications from the first individual about the area of interest.

In this way, the second individual may only be advised about the area of interest when it is referred or referenced by the first individual. This avoids or reduces processing power in unnecessarily providing the further information when it is not required (i.e. when the second user does not need to pay attention), as well as reducing distractions for the second individual.

If present, the first and second communication data may be the same communication data.

The further information may comprise an indicator of a recommended adjustment to the field of view of the second individual such that the determined area of interest would fall within the adjusted field of view.

The further information may comprise identifying information about the determined area of interest and/or an image of the determined area of interest.

The further information may comprise, if the determined area of interest is obstructed by an object within the field of view of the second individual, an indicator of the relative position of the obstructing object within the field of view of the second individual.

The method may comprise responsive to determining that the determined area of interest is not within the field of view of the second individual providing further information about the determined area of interest to the second individual. The step of providing the further information may comprise providing a visual representation, at a user interface, of the further information to the second individual.

There is also provided a program product comprising computer program code means which, when executed on a computing device having a processing system, cause the processing system to perform all of the steps of any herein described method.

There is also provided a processing system for aiding a second individual to identify an area of interest to a first individual, wherein the first and second individuals are located in a same physical environment. The processing system is configured to: determine an area of interest to the first individual with respect to an environment in the vicinity of the first individual; determine whether or not the determined area of interest is within a field of view of the second individual; and responsive to determining that the determined area of interest is not within the field of view of the second individual: provide an indicator that the determined area of interest is not within a field of view of the second individual to the first individual and/or the second individual; and/or provide further information about the determined area of interest to the second individual.

There is also proposed a system comprising the processing system; and a user interface configured to provide a visual representation of the further information for the second individual.

These and other aspects of the invention will be apparent from and elucidated with reference to the embodiment(s) described hereinafter.

### BRIEF DESCRIPTION OF THE DRAWINGS

For a better understanding of the invention, and to show more clearly how it may be carried into effect, reference will now be made, by way of example only, to the accompanying drawings, in which:
Figure 1 illustrates a physical environment;
Figure 2 is a flowchart illustrating a method;
Figure 3 is a flowchart illustrating another method;
Figure 4 illustrates a system according to an embodiment; and
Figure 5 illustrates a processing system according to an embodiment.

### DETAILED DESCRIPTION OF THE EMBODIMENTS

The invention will be described with reference to the Figures.

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

The invention provides a mechanism for selectively providing a second individual with information about an area of interest to a first individual. The mechanism determines whether the area of interest falls within a field of view of the second individual. If the area of interest does not fall within this field of view, then appropriate information about the area of interest is provided to the second individual.

Embodiments are based on the realization that a second individual may not always be able to see a feature/element referenced by a first individual, but that an overload of information to a second individual would negatively impact their ability to contribute to a collaborative task. It is therefore proposed to only provide information on the certain feature/element when the feature/element is not within the field of view of the second individual.

Proposed approaches can be adopted in any scenario in which a collaborative task is being performed, e.g., in a surgical suite/room or the like.

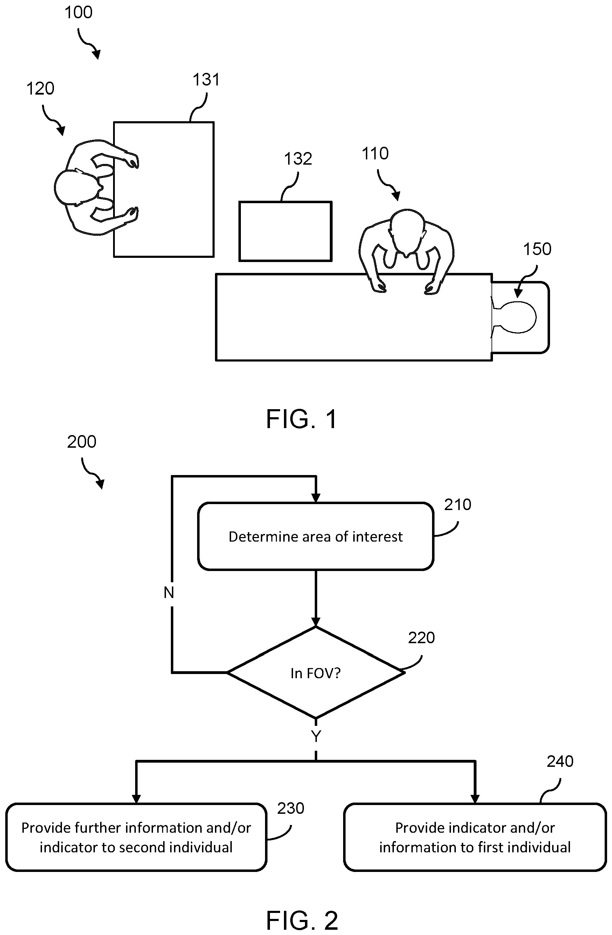

Figure 1 illustrates a use case scenario in which embodiments can be employed, for improved contextual understanding.

In particular, Figure 1 schematically illustrates a physical environment 100 in which a first individual 110 and a second individual 120 are located. Here, the physical environment 100 is a surgical suite/room, the first individual 110 is a surgeon and the second individual 120 is a surgical/theatre assistant. The two individuals are working on a collaborative task, e.g., a surgical procedure being performing upon a patient 150.

It will be appreciated that Figure 1 is schematic, and an actual surgical suite/room is likely to contain a significantly larger amount of equipment and/or number of people, which have been omitted for the sake of figure clarity.

In a large number of physical environments, effective communication is of crucial importance to achieving a successful outcome for a collaborative task. However, this is not always easy to accomplish, due to the amount of equipment and number of people that may be present in such an environment.

For example, during a surgical procedure, a surgeon 110 may need to quickly react/respond to sudden or emergent changes/events, e.g., for which certain tools need to be provided by a surgical assistant 120 from a tool station 131. In an ideal scenario, the surgical assistant would be able to respond or act proactively to a surgeon's request or communication.

However, due to the presence of the subject, equipment (e.g., the tool station 131 or a monitoring system 132) and/or other people, the assistant will not always have a good or clear view on emerging events that can be seen by the surgeon, meaning that they lack contextual information for responding to a surgeon's requests or communications.

For instance, if a surgeon is making an incision that results in an undesirable bleed, they may (audibly) indicate "I need a clamp to stop this bleeding here". However, the surgical assistant may not be in a position to see the bleed or location, and is therefore unable to make a good judgement what type of clamp to provide. This would affect a speed and/or efficiency of providing valuable care to the patient, which has a direct impact on their likelihood of the surgical procedure having a successful outcome.

The above described scenario is purely for the sake of example, and the skilled person would readily appreciate that similar scenarios may arise in this and other technological fields (e.g., during repair of a car, preparation of foodstuff and so on).

The present invention relates to approaches for improving the contextual information available to the first and/or second individual based on the view of the first individual. This allows the first and/or second individual to perform more appropriate actions based on what can be seen by the first individual, to credibly assist the individuals in performing a technical task (e.g., for the second individual to select a most appropriate tool for a surgical action).

In particular, approaches propose to first determine an area of interest to a first individual. If this area of interest is not within the field of view of a second individual, then (further) information about the area of interest is provided to the second individual and/or an indicator is provided to the first and/or second indicator. The former provides the second individual with useful contextualizing information for understanding or identifying the area of interest, without disturbing or disrupting the second individual if they are able to see the area of interest. The latter provides a prompt to the first and/or second individual that the second individual cannot see the area of interest, to prompt more effective communication.

Figure 2 is a flowchart illustrating a computer-implemented method 200 according to an embodiment.

The method 200 comprises a step 210 of determining an area of interest to the first individual with respect to a physical environment in the vicinity of the first individual.

The area of interest may be the point of regard (POR) of the first individual, i.e. the area of the environment in the vicinity of the individual that the first individual is looking at. As another example, the area of interest may be an area surrounding or near to the point of regard.

The method 200 also comprises a step 220 of determining whether or not the determined area of interest is within a field of view of the second individual. The field of view represents the absolute region of the environment that can be seen by the second individual, e.g., at a particular point in time.

The method also comprises performing a step 230 and/or a step 240.

Step 230 comprises, responsive to determining that the determined area of interest is not within the field of view of the second individual, providing further information about the determined area of interest and/or an indicator that the determined area of interest is not within the field of view of the second individual to the second individual. Various examples of suitable content for further information are provided later in this disclosure.

Step 240 comprises providing the first user with an indicator that the determined area of interest is not within a field of view of the second individual. The indicator may comprise information responsive to the determination of whether or not the determined area of interest is within the field of view of the second individual.

In some examples, step 240 may comprise, responsive to the determined area of interest not being within the field of view of the second individual, providing an indicator to the first individual that the second individual is not able to view the area of interest. The indicator may be provided in the form of a visual representation at a user interface or the like.

The first individual could use this information to provide more explicit communication about the area of interest so that the second individual can act or respond appropriately. This may also urge the first individual to change the environment, if possible, to enable viewing of the region of interest by the second individual.

If any information is provided to the first and/or second individual responsive to the determined area of interest not being within the field of view of the second individual, then this information may stop being provided after the occurrence of a trigger.

In one example, this trigger may be a predetermined length of time passing since providing the information. In another example, this trigger may be a predetermined length of time passing since the first individual looks away from the area of interest. In another example, this trigger may be an instruction/command of the second individual, such as a voice demand. In another example, this trigger may be an identification of the area of interest coming into the field of view of the second individual. In another example, this trigger may be a predetermined length of time passing since an identification of the area of interest coming into the field of view of the second individual.

If step 220 determines that the determined area of interest is within the field of view of the second individual, the method 200 may revert back to step 210.

One example mechanism for performing steps 210 and 220 makes use of an image-based approach.

In this example, the step 210 of obtaining the area of interest may comprise obtaining first image data representing the field of view of the first individual. The image data can then be processed to identify a portion representing an area of interest within the first image data. This may be performed using, for instance, eye gaze information identifying a relative eye gaze of the first individual with respect to the first image data, approaches for which are well established in the art. In this way a particular region or area of the image data, i.e., a portion of the image data, representing the area of interest can be identified.

Thus, step 210 may comprise obtaining first image data representing the field of view of the first individual; obtaining eye gaze information identifying a relative eye gaze of the first individual with respect to the first image data; and processing the first image data and the eye gaze information to identify a portion representing an area of interest.

One approach that might be performed for identifying a portion of image data representing an area of interest is disclosed in US Patent Application having publication number US 2021/149482 A1. Other approaches are known in the art.

Step 220 may comprise determining whether the same area of interest, represented in the identified portion of the first image data, is represented within second image data representing the field of view of the second individual.

Step 220 could be performed, for instance by processing the identified portion of the first image data (which represents the area of interest) to identify or annotate the area of interest, e.g., identify one or more physical elements in the area of interest. Approaches may make use of an appropriately configured/trained machine-learning algorithm or computer vision system (such as a neural network) to identify or classify the area of region.

The second image data may then be processed to identify whether a corresponding part of the second image data contains a representation of the area of interest, e.g., whether the identified one or more physical elements are present in the second image data. This may also be performed using an appropriately configured/trained machine-learning algorithm or computer vision system, such as a neural network. For instance, a neural network may classify the second image data to predict whether or not the identified element(s) are present in the second image data.

As another example, step 220 may be performed by performing a comparative process between the identified portion of the first image data and the second image data. If a similarity between the identified portion of the first image data and any portion of the second image data exceeds a predetermined threshold, then it can be predicted that the second image data contains a representation of the area of interest.

Thus, more generally, step 220 may comprise obtaining second image data representing the field of view of the second individual, processing the second image data and the identified portion of the first image data to determine whether the area of interest, represented in the identified portion of the first image data, is represented within the second image data.

The first image data may be obtained, for example, by a camera worn by the first individual. The second image data may be obtained, for example, by a camera worn by the second individual.

In this way, image data can be processed to perform steps 210 and 220 of determining whether an area of interest is within a field of view of the second individual. Thus, an image-based approach is achieved.

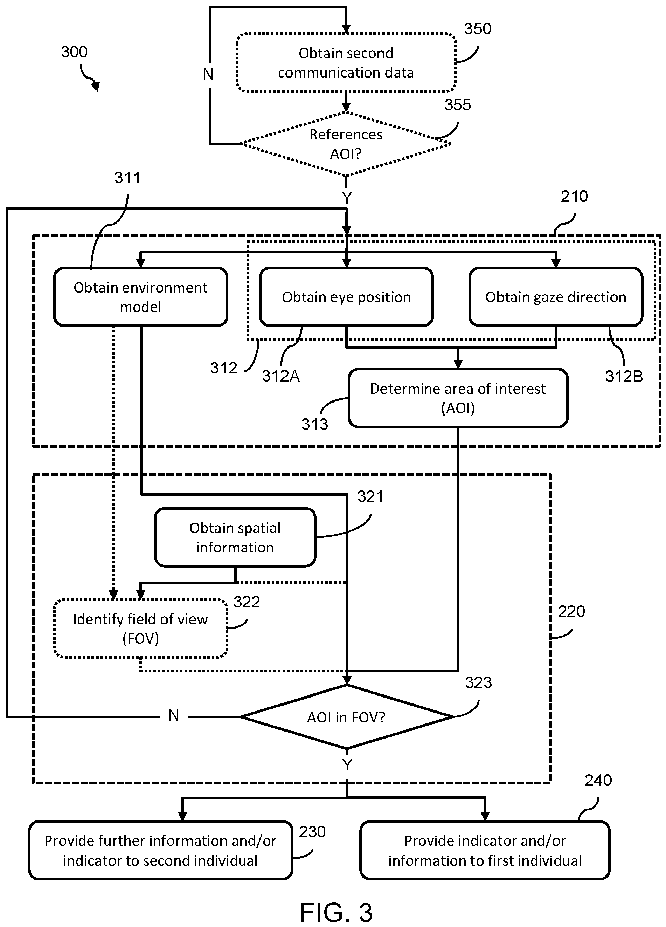

Figure 3 illustrates another example mechanism for performing steps 210 and 220, which employs a model-based approach for determining whether an area of interest is within a field of view of the second individual.

In particular, step 210 may comprise a step 311 of obtaining an environment model representing the physical environment in the vicinity of the first individual. The environment model may, for instance, be a (computer-based) model, map or representation of the physical environment in the vicinity of the first individual. The environment model may be defined within a predetermined co-ordinate system representing a space in which the environment lies. The predetermined co-ordinate system may also be known as the model co-ordinate system.

Generally, an environment model is a data representation of the physical environment surrounding the first individual, i.e., a mathematical representation of the surfaces in the vicinity of the first individual. The environment model may define or represent the (three-dimensional shape of the) environment in the vicinity of the first individual within a predefined/model co-ordinate system. In particular, the environment model may define or represent the location of at least the surfaces of the environment in the vicinity of the first individual within the model co-ordinate system.

One example of a suitable data representation is a polygon mesh, which defines the locations of vertices of a number of hypothetical polygons, such as triangles, that together represent the shape of the physical environment in the vicinity of the first individual. Another example is a volumetric mesh.

Various approaches for deriving a suitable model, map or representation of the physical environment could be employed. In one approach, generating a 3D model or representation of an environment could employ a 3D scanner to scan the environment in order to construct a model. Generally, a 3D scanner collects data (such as image data or LIDAR data) about an environment. This can be appropriately processed, e.g., using photogrammetry techniques or the like, to construct a 3D model of that environment. A suitable example of a 3D scanner is a LIDAR system, although other 3D scanners make use of images or image data captured by a camera.

Well-known techniques for generating a model of an environment include: photogrammetry techniques, structure from motion (SfM) techniques, multi-view stereo (MVS) algorithms and Simultaneous Localization and Mapping (SLAM) techniques.

As another example, a standardized environment model may be obtained in step 311, e.g., a model representing an average or expected shape and/or structure of the environment. By way of example, some environments may be considered to have an expected or default shape (e.g., a surgical environment), which can be exploited to produce a standardized environment model.

By way of example only, an expected shape and/or structure of the environment may be constructed by tracking the location of equipment within known environmental bounds. For instance, if the equipment in the environment space tracks its own positions and orientations, it is possible to construct an environmental model from the tracked positions (as the shape of the equipment can be known or predetermined).

Of course, a combination of these procedures may be used. For instance, a standardized environment model may be obtained and supplemented with additional model data (e.g., derived from image data of the individual(s)).

Step 311 may comprise retrieving the environment model from a memory/storage unit or from a model generator (i.e., a model generation unit). The model generator may be configured to generate the environment model, e.g., by processing data obtained from a 3D scanner.

Alternatively, step 311 may itself comprising generating a model, e.g., using data obtained from a 3D scanner.

Step 210 may also perform a step 312 of obtaining first gaze data representing an origin (or "eye position") and direction (or "gaze direction") of the first individual's gaze with respect to the environment. In particular, the first gaze data may facilitate identification of the relative origin and direction of the first individual's gaze with respect to the environment model, i.e., using the model co-ordinate system.

In one example, the first gaze data may be derived by separately determining 312A the eye position of the first individual, which represents the origin of the first individual's gaze, and determining 312B the gaze direction, which represents the direction in which the first individual's eye(s), or more specifically pupil(s), are looking. Both of these data values may be relative to the environment model, e.g., defined using the model co-ordinate system. For instance, the eye position may be defined using co-ordinates of the model co-ordinate system. The gaze direction may be defined using a vector or the like.

The eye position of the first individual relative to the environment model (e.g., in the model co-ordinate system) could be determined in step 312A automatically if the environment model is created using a Simultaneous Localization and Mapping (SLAM) technique.

As another example, step 312A could use any suitable localization technique that facilitates localization of the eye position with respect to an environment model (e.g., in the model co-ordinate system). This may comprise determining the eye position of the first individual within a second co-ordinate system, which is registered or registerable to the model co-ordinate system. Suitable approaches may employ a remote 3D (depth) camera localization technique, Wi-Fi localization, or any other localization method.

The (eye) gaze direction of the first individual could be determined, for instance, using a gaze direction tracker. A gaze direction tracker identifies the direction in which an individual's eye(s) are looking, and are well established in the art. Any gaze direction tracker could be implemented to derive the (eye) gaze direction, such as those produced by Tobii^{®}. Other examples would be readily apparent to the skilled person.

Another approach is to make use of a head orientation tracking system that tracks an orientation of the head of the first individual. The orientation of the head represents the gaze direction of the first individual. During complex technical tasks, an individual is more likely to look directly at an area of interest, such that a head orientation (e.g., with respect to the environment model) can accurately represent a gaze direction with adequate accuracy.

When the origin (i.e. eye position) and the gaze direction have been determined with respect to the environmental model, it is possible to determine, in a step 313, an area of interest with respect to the environment model. Thus, step 210 may comprise a step 313 of processing at least the environment model and the first gaze data to identify an area of interest within the environment in the vicinity of the first individual.

Identifying the area of interest may, in particular, comprise identify a location or position with respect to the model co-ordinate system, e.g., an area of interest of the environment model. Put another way, the area of interest may be a portion or part of the environment model.

Identification of the area of interest can be readily achieved when the origin and direction of the gaze of the first individual is defined in a same co-ordinate system as the environment model. More particularly, the end-point of the gaze on the environment model can be identified. The end-point may represent a (first or nearest) intersection between the environment model and a hypothetical line originating at the eye position (origin) and extending along the gaze direction. This end-point represents a point near or within the area of interest. In some examples, the area of interest can be defined by the location of the end-point.

By way of example, the area of interest may be identified by tracing a ray from the origin of the gaze of the first individual along the direction of the gaze of the first individual. A first or closest intersection between the traced ray and the environment model may define the end-point of the first individual's gaze, which is a location in/near the area of interest.

In some examples, more accurate determination or identification of the area of interest can be achieved by processing additional information (in step 313) to identify the area of interest.

For instance, first communication data may also be used in step 313 to identify the area of interest. The first communication data may contain one or more verbal or non-verbal communications from the first individual about the area of interest. The first communication data may, for instance, contain audio data (representing a verbal communication of the first individual) and/or gesture data (representing a gesture of the first individual).

Thus, step 313 may comprise processing at least the environment model, the first gaze data and the first communication data to identify the area of interest within the environment in the vicinity of the first individual.

One approach for using first communication data in identifying the area of interest may be to process first communication data containing audio data (e.g., using a natural language processing system) to extract identifying information (e.g., a label or description) of the area of interest contained in the first communication data. This identifying information may be used to identify a feature or element of/in the environment model that can be represented by the identifying information. The identified feature or element may represent the area of interest.

In particular, the first gaze data may be used to identify a region or locality of interest. For instance, an end-point may be determined and a region of interest may be defined as being a region within a certain distance of this end-point. The first communication data may be used to identify a feature or element in the region/locality, which acts as the area of interest.

By way of example, consider a scenario in which the environment model represents a surgical environment (and accurately represents at least the subject undergoing surgery). The first gaze data may identify a region of interest to the first individual, the region containing a number of possible features or elements (e.g., different parts of the subject undergoing surgery). The region of interest may be a region containing the end-point of the first individual's gaze (e.g., a region of a predetermined diameter, where the center of the region is defined by the end-point). The first communication data may contain an audio data of the first individual's speech, e.g., "I need a clamp to stop this bleed". A natural language processing algorithm may identify that the area of interest is a "bleed". Step 313 may thereafter identify a bleed in the region of interest as the area of interest.

European Patent Application having publication no. EP 3709060 A1, with first named inventor Jan Hoffmann and published 19 March 3014, discloses another example approach for a mechanism of determining a region of interest ("gaze point") of a first individual, which could be repurposed for performing step 210 of method 300.

Takemura, Kentaro, et al. "Estimating 3D point-of-regard and visualizing gaze trajectories under natural head movements." Proceedings of the 3010 Symposium on Eye-Tracking Research & Applications. 3010 describe another approach for determining a region of interest ("point-of-regard") of an individual, which could be employed for performing step 210 of method 300.

The identified area of interest may be defined with respect to the environment model, e.g., using one or more co-ordinates of the model co-ordinate system. Identifying an area of interest may therefore comprise identifying a position of the area of interest.

As previously explained, step 220 of method 300 comprises determining whether or not the determined area of interest is within a field of view of the second individual.

Step 220 may be performed, for instance, by determining a field of view of the second individual with respect to the environment model (e.g., defined in step 311) and determining whether the position of the area of interest (with respect to the environment model) falls within this field of view.

Another approach for performing step 220 may be determine whether or not there are any objects blocking a line of sight for the individual towards the area of interest.

Both of these approaches may share a step 321 of obtaining spatial information that identifies a relative position of the second individual, and preferably the eye position of the second individual, with respect to the environment model. Step 321 may therefore comprise determining, within the model co-ordinate system, an eye position of the second individual. Approaches for establishing or localizing a position of an individual have been previously described (e.g., with reference to step 312A), and could be employed in this scenario.

By way of example, localization of the second individual's eye position in the environment can be done using a SLAM technique, a remote 3D (depth) camera, Wi-Fi localization, or any other localization method. If an SLAM technique is used, the SLAM models produced for both individuals could be combined to create the environment model as a reference (e.g., in step 311 if performed).

In one approach for performing step 220, step 220 comprises a step 322 of processing the spatial information and the environment model to identify a field of view of the second individual with respect to the environment in the vicinity of the first individual.

Identifying a field of view of an individual could be performed by using the determined position of the second individual as an origin, and using a determined or predicted visual field of the second individual to establish the field of view. A visual field (or "scope of vision") represents the relative angles for which an individual can see objects (e.g., a range or bounds of vision), thereby defining the area that can be seen by an individual looking straight ahead without moving the eyes or gaze. The visual field for the second individual may be an average, e.g., a global average, visual field or a visual field established by prior measurement.

In one example, the visual field may be defined using standard measurements. One definition for a visual field is set out in Spector RH. Visual Fields. In: Walker HK, Hall WD, Hurst JW, editors. Clinical Methods: The History, Physical, and Laboratory Examinations. 4rd edition. Boston: Butterworths; 1990. Chapter 116.

In another example, the visual field may be defined using measurements specific to the second individual, e.g., established using a visual field test technique such as the confrontational visual field exam, a (Kinetic) perimetry technique and so on.

Heijl, Anders, Vincent Michael Patella, and Boel Bengtsson. "The Field Analyzer Primer: Effective Perimetry" (2012) provides examples of expected/average visual field sizes, as well as techniques for determining a specific field size for an individual.

Determining the field of view may comprise using the visual field for the second individual and the determining position of the second individual to identify areas of the environment model that are likely to be visible to the second individual. The determined field of view may be represented by a second mesh or model within the co-ordinate system used to define the environmental model.

Once the field of view has been established, determination of whether or not the area of interest is within the field of view can be trivially performed in step 323, e.g., by determining whether a co-ordinate (or co-ordinates) representing the area of interest fall within a space bound by the determined field of view (e.g., within a space bound by a mesh representing the field of view).

Alternatively and/or additionally, determination of whether or not the area of interest is within the field of view of the subject can be performed by, in a step 323, ray-casting from the determined eye position of the second individual to the area of interest. If one or more objects (e.g., defined by the environment model) block the ray, then it can be predicted that the area of interest is within the field of view of the subject. Otherwise, it can be predicted that area of interest is not within the field of view of the subject.

If this alternative approach is taken, step 322 can be omitted.

Step 323 may act as a determination or decision step. Responsive to determining, in step 323, that the determined area of interest is not within the field of view of the second individual, the method may continue to step 230 and optional step 240. Otherwise, method 300 may be restarted.

With reference to Figure 2, it has been previously explained how the method 200, 300 may also comprise a step 230 of, responsive to determining that the determined area of interest is not within the field of view of the second individual, providing further information about the determined area of interest to the second individual and/or an indicator ("second indicator" or "second individual indicator") that the determined area of interest is not within a field of view of the second individual to the second individual.

One approach for providing an indicator and/or further information is to provide a visual representation, at a user interface, of the indicator and/or further information to the second individual. Thus, step 230 may comprise providing a visual representation, at a user interface, of the indicator and/or further information to the second individual.

The user interface may, for instance, comprise a wearable user interface such as a glass or head mounted heads-up display and/or an augmented reality display. The wearable user interface may be configurable to provide a visualization, e.g., in the forms of images, graphical elements, holograms, text, augmented reality and so on, of the content of the further information.

The indicator may take the form of a simple visual indicator of whether or not the area of interest to the first individual is within the field of view of the second individual, e.g., a symbol that changes color or the like.

Various forms of further information may be provided to the second individual. A few examples of these forms are hereafter described. The further information may contain any one or more of these examples and/or other examples not explicitly herein described. In some examples, one or more of the hereafter described forms are only provided to the second individual responsive to a request or user input from the second individual.

In one example, the further information may comprise an indicator of a recommended adjustment to the field of view of the second individual such that the determined area of interest would fall within the adjusted field of view.

The recommended adjustment can be determined using the environment model, the position of the area of interest with respect to the environment model and at least the eye position of the second individual with respect to the environment model.

For instance, a hypothetical line may be defined between the position of the area of interest and the eye position of the second individual. The recommended adjustment may be a recommended change in the eye position such that the hypothetical line does not intersect with any other part of the environment model before reaching the position of the area of interest.

Another approach is to use a defined field of view of the second individual with respect to the environment model. The recommended adjustment may be a recommended change to the eye position such that the appropriately adjusted field of view (with respect to the environment model) of the second individual contains the position, with respect to the environment model, of the area of interest.

The recommended adjustment can, for example, be provided to the second individual via a user interface in the form of an arrow showing where to move to make the area of interest visible to the second individual.

In an example, the further information comprises identifying information about the determined area of interest. For instance, the identifying information may contain a label for the area of interest. This label could be derived from an annotated environment model (being an annotated version of the environment model, which labels different areas/regions of the environment model) and the position of the area of interest with respect to the environment model. In particular examples, the nearest annotation to the position of the area of interest may be selected as the label for the area of interest, which could be included as the identifying information about the determined area of interest.

In an example, the further information comprises an image of the determined area of interest. By way of example, the further information may comprise an image taken from the viewpoint of the first individual (e.g., using a head or body mounted camera) or an image taken from a camera near the first individual. This image would contain image information about the identified area of interest.

In an example, the further information comprises, if the determined area of interest is obstructed by an object within the field of view of the second individual, an indicator of the relative position ("positional indicator") of the obstructing object within the field of view of the second individual.

This can be achieved, for instance, using the environment model, the position of the area of interest with respect to the environment model and at least the eye position of the second individual with respect to the environment model. A hypothetical line may be defined between the position of the area of interest and the eye position of the second individual. The position of an obstructing object (i.e., an object lying on the hypothetical line) may be identified, and included in the further information.

As the field of view of the second individual is known, it is possible to give an accurate identification of the relative location, in the second individual's field of view, of the obstructing object.

For instance, the positional indicator may be provided via a user interface in the form of an arrow showing where the (not visible to the second individual) area of interest is. As another example, the positional indicator may be provided via a user interface in the form of an outline rendering of the obstructing object.

As yet another example, the further information may comprise a simulation of the area of interest (and optional surrounding areas). By way of example, the part of the environment model corresponding to the area of interest may be provided to the second individual. Alternatively, the area of interest may be 3D scanned (e.g., in real-time) by a stationary or worn (by the first user) 3D scanner, e.g., using LIDAR. The 3D scan may be used to produce a digital hologram/copy, which can be provided to the second individual. This may, for instance, be provided by an appropriately configured augmented reality display.

In an advanced example, it may be possible to augment an obscuring object with a 3D representation of the area of interest from the perspective of the second individual. Thus, a simulation of the area of interest may be appropriately generated and rotated and positioned within a user interface such that it provides a simulated view of the area of interest that would be present without any obstructing objects.

In another advanced example, it may be possible to effectively render away obstructing elements using an appropriate user interface, thus revealing the area of interest. This represents a more advanced example of rendering the area of interest within a user interface. By way of example, a mixed reality headset, such as the Varjo XR-3, may be used as the user interface for simulation the rendering away of obstructing elements to reveal (a representation of) the area of interest.

With reference to Figure 2, it has been previously explained how the method 200, 300 may also comprise a step 240 of, responsive to determining that the determined area of interest is not within the field of view of the second individual, providing an indicator ("first indicator" or "first individual indicator") that the determined area of interest is not within a field of view of the second individual to the first individual.

The method 300 may be configured to only perform step 210 and/or step 220 and/or step 230/240 (and any following steps) responsive to a trigger from the first individual. This trigger may be a verbal or non-verbal communication from the first individual about the area of interest.

Thus, determining whether a determined area of interest is within the field of view of the second individual may only be performed if the first individual provides information about the area of interest. This would reduce processing resource required and avoid/reduce potential confusion for the second individual.

The method 300 may therefore comprise a step 350 of obtaining second communication data representing one or more verbal or non-verbal communications from the first individual.

A step 355 may be performed of determining whether or not the second communication data contains a verbal or non-verbal communications from the first individual about the area of interest.

Responsive to step 355 determining that the second communication data contains a verbal or non-verbal communications from the first individual about the area of interest, the method moves to step 210. Otherwise, the method reverts back to step 350.

Steps 350 and 355 may be performed in alternative locations, e.g., between steps 210 and 220 or between steps 220 and 230. The skilled person would be able to appropriately modify the function of step 350 and 355 accordingly.

Steps 350 and 355 may be performed in any other method or mechanism according to other embodiments, e.g., in the image-based mechanism previously described.

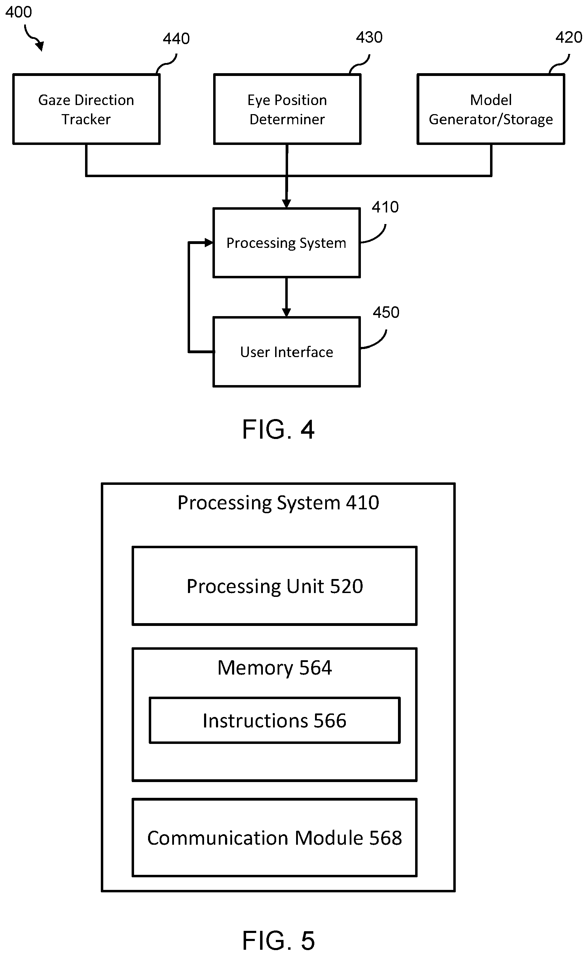

Figure 4 illustrates a system 400 according to embodiments.

The system 400 comprises a processing system 410 for aiding a second individual to identify an area of interest to a first individual, wherein the first and second individuals are located in a same physical environment.

The processing system is configured to carry out any previously described method.

Thus, the processing system is configured to: determine an area of interest to the first individual with respect to an environment in the vicinity of the first individual; determine whether or not the determined area of interest is within a field of view of the second individual; and responsive to determining that the determined area of interest is not within the field of view of the second individual, provide an indicator that the determined area of interest is not within a field of view of the second individual to the first individual and/or the second individual; and/or provide further information about the determined area of interest to the second individual.

The procedure for determining an area of interest and/or whether the determined area of interest is within a field of view of the second individual may make use of an environment model. The system 400 may comprise a model generator or model storage module 420 for generating/storing the model to be provided the processing system.

The procedure for determining an area of interest and/or whether the determined area of interest is within a field of view of the second individual may make use of a determined eye position of the first and/or second individual. The system 400 may comprise an eye position determiner 430 for generating or determining the eye position of the first and/or second individual. Suitable eye positions determiners 430 may employ a remote 3D (depth) camera localization technique, Wi-Fi localization, or any other localization method.

The procedure for determining an area of interest and/or whether the determined area of interest is within a field of view of the second individual may make use of a determined gaze direction of the first and/or second individual. The system 400 may comprise a gaze direction tracker 440 for generating or determining the gaze direction of the first and/or second individual.

The procedure for providing the indicator(s) to the first and/or second individuals and/or further information about the determined area of interest to the second individual may be performed using a user interface 450 of the system. Example user interfaces include head-mounted user displays and/or standalone user displays.

Providing the indicator(s) and/or (further) information to the first and/or second individual may comprise providing a visual representation, at the user interface, of the indicator(s) and/or (further) information.

The user interface 450 may also be used to provide first and/or second communication data to the processing system 410, e.g., for use in triggering steps of the method performed by the processing system 410 and/or use within steps of the method performed by the processing system 410.

Figure 5 is a schematic diagram of a processing system 410, according to embodiments of the present disclosure. The processing system 410 is configured to carry out a method according to an embodiment, such as the method 300 described with reference to Figure 3.

As shown, the processing system 410 may include a (data) processing unit 520, a memory 564, and a communication module 568. These elements may be in direct or indirect communication with each other, for example via one or more buses.

The processing unit 520 may include a central processing unit (CPU), a digital signal processor (DSP), an ASIC, a controller, an FPGA, another hardware device, a firmware device, or any combination thereof configured to perform the operations described herein. The processing unit 520 may also be implemented as a combination of computing devices, e.g., a combination of a DSP and a microprocessor, a plurality of microprocessors, one or more microprocessors in conjunction with a DSP core, or any other such configuration. In some embodiments, the processor is a distributed processing system, e.g. formed of a set of distributed processors.

The memory 564 may include a cache memory (e.g., a cache memory of the processing unit 520), random access memory (RAM), magnetoresistive RAM (MRAM), read-only memory (ROM), programmable read-only memory (PROM), erasable programmable read only memory (EPROM), electrically erasable programmable read only memory (EEPROM), flash memory, solid state memory device, hard disk drives, other forms of volatile and non-volatile memory, or a combination of different types of memory. In an embodiment, the memory 564 includes a non-transitory computer-readable medium. The non-transitory computer-readable medium may store instructions. For example, the memory 564, or non-transitory computer-readable medium may have program code recorded thereon, the program code including instructions for causing the processing system 410, or one or more components of the processing system 410, particularly the processing unit 520, to perform the operations described herein. For example, the processing system 410 can execute operations of the method 500.

Instructions 566 may also be referred to as code or program code. The terms "instructions" and "code" should be interpreted broadly to include any type of computer-readable statement(s). For example, the terms "instructions" and "code" may refer to one or more programs, routines, sub-routines, functions, procedures, etc. "Instructions" and "code" may include a single computer-readable statement or many computer-readable statements. The memory 564, with the code recorded thereon, may be referred to as a computer program product.

The communication module 568 can include any electronic circuitry and/or logic circuitry to facilitate direct or indirect communication of data between the processing system 410 and any external device. In that regard, the communication module 568 can comprise an input interface for receiving data from external devices (such as a model generator, an eye position determine, a gaze direction tracker and/or a user interface). The communication module 568 may also comprise an output interface for controlling or providing data to an external device, such as a user interface.

In some instances, the communication module 568 may facilitate direct or indirect communication between various elements of the processing system 410, e.g., through the use of one or more buses or other communication channels.

It will be understood that disclosed methods are preferably computer-implemented methods. As such, there is also proposed the concept of a computer program comprising computer program code for implementing any described method when said program is run on a processing system, such as a computer or a set of distributed processors.

Different portions, lines or blocks of code of a computer program according to an embodiment may be executed by a processing system or computer to perform any herein described method. In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

The present disclosure proposes a computer program (product) comprising instructions which, when the program is executed by a computer or processing system, cause the computer or processing system to carry out (the steps of) any herein described method. The computer program (product) may be stored on a non-transitory computer readable medium.

Similarly, there is also proposed a computer-readable (storage) medium comprising instructions which, when executed by a computer or processing system, cause the computer or processing system to carry out (the steps of) any herein described method. There is also proposed computer-readable data carrier having stored thereon the computer program (product) previously described. There is also proposed a data carrier signal carrying the computer program (product) previously described.

The skilled person would be readily capable of developing a processing system for carrying out any herein described method. Thus, each step of a flow chart may represent a different action performed by a processing system, and may be performed by a respective module of the processing system.

Variations to the disclosed embodiments can be understood and effected by those skilled in the art in practicing the claimed invention, from a study of the drawings, the disclosure and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage.

A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

## Claims

1. A computer-implemented method (200, 300) of aiding a second individual (120) to identify an area of interest to a first individual (110), wherein the first and second individuals are located in a same physical environment (100), the computer-implemented method comprising:
determining (210) an area of interest to the first individual with respect to a physical environment in the vicinity of the first individual;
determining (220) whether or not the determined area of interest is within a field of view of the second individual; and
responsive to determining that the determined area of interest is not within the field of view of the second individual:
providing (230, 240) an indicator that the determined area of interest is not within the field of view of the second individual to the first individual and/or the second individual; and/or
providing (230) further information about the determined area of interest to the second individual.

2. The computer-implemented method of claim 1, further comprising:
responsive to determining that the determined area of interest is within the field of view of the second individual, neither providing the indicator that the determined area of interest is not within the field of view of the second individual to the first individual and/or the second individual nor providing the further information about the determined area of interest to the second individual.

3. The computer-implemented method of claim 1 or 2, comprising a step of, responsive to determining that the determined area of interest is not within the field of view of the second individual, providing, to the first individual, an indicator that the determined area of interest is not within a field of view of the second individual.

4. The computer-implemented method of any of claims 1 to 3, wherein the step of determining the area of interest comprises:
obtaining an environment model representing the physical environment in the vicinity of the first individual;
obtaining first gaze data representing an origin and direction of the first individual's gaze with respect to the environment model; and
processing at least the environment model and the first gaze data to identify an area of interest with respect to the environment model.

5. The computer-implemented method of claim 4, wherein the step of determining whether or not the determined area of interest is within a field of view of the second individual comprises:
obtaining spatial information identifying a relative position and orientation of the second individual with respect to the environment model;
processing the spatial information and the environment model to determine whether or not the determined area of interest is within the identified field of view of the second individual with respect to the environment in the vicinity of the first individual.

6. The computer-implemented method of any of claims 4 to 5, wherein:
the step of determining the area of interest further comprises obtaining first communication data representing one or more verbal or non-verbal communications from the first individual about the area of interest; and wherein one or more of the following is performed:
the step of processing at least the environment model and the first gaze data comprises processing at least the environment model, the first gaze data and the first communication data to identify the area of interest within the environment in the vicinity of the first individual.

7. The computer-implemented method of any of claims 1 to 3, wherein:
the step of determining an area of interest to the first individual comprises:
obtaining first image data representing the field of view of the first individual;
obtaining eye gaze information identifying a relative eye gaze of the first individual with respect to the first image data; and
processing the first image data and the eye gaze information to identify a portion representing an area of interest;
and
the step of determining whether or not the determined area of interest is within a field of view of the second individual comprises:
obtaining second image data representing the field of view of the second individual; and
processing the second image data and the identified portion of the first image data to determine whether the area of interest, represented in the identified portion of the first image data, is represented within the second image data.

8. The computer-implemented method of any of claims 1 to 7, further comprising obtaining second communication data representing one or more verbal or non-verbal communications from the first individual;
wherein the step of determining whether or not the determined area of interest is within a field of view of the second individual is only performed if the second communication data contains a verbal or non-verbal communications from the first individual about the area of interest.

9. The computer-implemented method of any of claims 1 to 8, wherein the further information comprises an indicator of a recommended adjustment to the field of view of the second individual such that the determined area of interest would fall within the adjusted field of view.

10. The computer-implemented method of any of claims 1 to 9, wherein the further information comprises identifying information about the determined area of interest and/or an image of the determined area of interest.

11. The computer-implemented method of any of claims 1 to 10, wherein the further information comprises, if the determined area of interest is obstructed by an object within the field of view of the second individual, an indicator of the relative position of the obstructing object within the field of view of the second individual.

12. The computer-implemented method of any of claims 1 to 11, wherein:
the computer-implemented comprises, responsive to determining that the determined area of interest is not within the field of view of the second individual providing further information about the determined area of interest to the second individual; and
the step of providing the further information comprises providing a visual representation, at a user interface, of the further information to the second individual.

13. A computer program product comprising computer program code means which, when executed on a computing device having a processing system, cause the processing system to perform all of the steps of the method according to any of claims 1 to 12.

14. A processing system (410) for aiding a second individual (120) to identify an area of interest to a first individual (110), wherein the first and second individuals are located in a same physical environment (100), the processing system being configured to:
determine (210) an area of interest to the first individual with respect to an environment in the vicinity of the first individual;
determine (220) whether or not the determined area of interest is within a field of view of the second individual; and
responsive to determining that the determined area of interest is not within the field of view of the second individual:
provide (230, 240) an indicator that the determined area of interest is not within a field of view of the second individual to the first individual and/or the second individual; and/or
provide (230) further information about the determined area of interest to the second individual.

15. A system (400) comprising:
the processing system (410) of claim 14; and
a user interface (450) configured to provide a visual representation of the indicator for the first individual and/or second individual and/or further information for the second individual.
